# EUROPÄISCHE PATENTSCHRIFT

(11) **EP 1 439 344 B1**
(45) Veröffentlichungstag und Bekanntmachung des Hinweises auf die Patenterteilung: **27.04.2011**
(21) Anmeldenummer: 04000640.5
(22) Anmeldetag: 14.01.2004
(51) Int. Cl.: F16L 55/46, B05B 12/14, B05B 5/16

(54) **Molch**
Pig
Râcleur

(30) Priorität: 20.01.2003 DE 10301942; 06.05.2003 EP 03010195
(43) Veröffentlichungstag der Anmeldung: 21.07.2004
(73) Patentinhaber: Dürr Systems GmbH, 74321 Bietigheim-Bissingen (DE)
(72) Erfinder: Martin, Herbert, 71384 Weinstadt (DE); Stiegler, Martin, 71711 Steinheim (DE); Schwager, Werner, 71642 Ludwigsburg (DE); Collmer, Andreas, 71665 Vaihingen/Enz (DE); Michelfelder, Manfred, 71711 Steinheim (DE)
(74) Vertreter: Heusler, Wolfgang

(56) Entgegenhaltungen:
- EP-A- 0 888 825
- EP-A- 1 108 475
- EP-A- 1 172 153
- DE-A1- 3 511 260
- US-A- 4 638 278

## Beschreibung

Die Erfindung betrifft einen Molch für eine Beschichtungsmittelleitung in einer Beschichtungsanlage gemäß dem Oberbegriff des Anspruchs 1 und ein Herstellungsverfahren gemäß Anspruch 17.

In modernen Beschichtungsanlagen für die Serienbeschichtung von Bauteilen wie z.B. Fahrzeugkarossen werden Molche eingesetzt, um Beschichtungsmittelleitungen u.a. bei einem Farbwechsel von Beschichtungsmittelresten zu reinigen, die an der Innenwand der Beschichtungsmittelleitungen anhaften, oder um Beschichtungs- und/oder Reinigungsmaterial durch die Leitung zu fördern.

Ein derartiger Molch und seine Verwendung sind beispielsweise in DE 102 40 072 und der entsprechenden EP-Anmeldung 03 018 587.0 beschrieben.

Ein aus EP 0 405 075 B1 bekannter Molch besteht aus einem Grundkörper, der in eine Rohrleitung einsetzbar ist, wobei an der Mantelfläche des Grundkörpers eine im Wesentlichen radial abstehende Dichtlippe angeordnet ist, die im Betrieb an der Innenwand der zu reinigenden Rohrleitung anliegt und daran anhaftende Materialreste abstreift. Nachteilig an diesem bekannten Molch ist die Tatsache, dass die Dichtlippe bei einer Änderung der Bewegungsrichtung des Molchs in axialer Richtung umklappt, was aufgrund der starken Deformation der Dichtlippe beim Umklappen mit einem hohen Verschleiß verbunden ist.

Aus EP 1 172 153 A1 ist ein sogenannter Doppelmolch bekannt, der als Signalgeber einen integrierten Permanentmagneten aufweist. Die räumliche Orientierung des Permanentmagneten in dem Molch ist hierbei jedoch von außen nicht erkennbar.

Weitere Ausführungsbeispiele von Molchen sind aus US 4 638 278, EP 0 888 825 A2, DE 35 11 260 und EP 1 108 475 A2 bekannt.

Der Erfindung liegt somit die Aufgabe zugrunde, einen möglichst verschleißarmen Molch zu schaffen, der in einer gewünschten räumlichen Orientierung in die Beschichtungsmittelleitung eingesetzt werden kann.

Diese Aufgabe wird, ausgehend von einem Molch gemäß dem Oberbegriff des Anspruchs 1, durch die kennzeichnenden Merkmale des Anspruchs 1 gelöst.

Die Erfindung umfasst die allgemeine technische Lehre, die Dichtlippe so an dem Grundkörper anzuordnen, dass diese bei einer Änderung der Bewegungsrichtung des Molchs nicht entgegen der Bewegungsrichtung umklappt, sondern weitgehend formstabil bleibt.

Die Dichtlippe erstreckt sich deshalb vorzugsweise bezüglich der Längsachse der Beschichtungsmittelleitung im Wesentlichen axial von dem Grundkörper. Eine derartige Anordnung und Gestaltung der Dichtlippe bietet den Vorteil, dass die auf die Dichtlippe wirkenden Kräfte bei einer Änderung der Bewegungsrichtung des Molchs relativ gering sind und die Dichtlippe deshalb nicht umklappen lassen.

Die Dichtlippe weist deshalb vorzugsweise eine radiale Erstreckung auf, die höchstens 10% der axialen Erstreckung der Dichtlippe beträgt, damit ein Umklappen der Dichtlippe bei einer Änderung der Bewegungsrichtung des Molchs in der Beschichtungsmittelleitung verhindert wird. Die maximal mögliche radiale Erstreckung der Dichtlippe hängt jedoch von der Steifigkeit des für die Dichtlippe verwendeten Materials, der Materialstärke und der Reibung zwischen der Dichtlippe und der Innenwand der Beschichtungsmittelleitung ab. So kann die Dichtlippe bei einem relativ starren Material in radialer Richtung weiter nach außen ragen, ohne dass die Dichtlippe bei einer Änderung der Bewegungsrichtung des Molchs in der Beschichtungsmittelleitung umklappt.

Vorzugsweise geht der Grundkörper an seiner Außenseite im Wesentlichen absatzlos in die Dichtlippe über, wobei der minimale Außendurchmesser des Grundkörpers über seine gesamte Länge vorzugsweise mindestens 80% des Innendurchmessers der Beschichtungsmittelleitung beträgt. Dadurch wird ein Umklappen der Dichtlippe bei einer Änderung der Bewegungsrichtung des Molchs in der Beschichtungsmittelleitung verhindert, da zwischen der Mantelfläche des Grundkörpers und der Innenwand der Beschichtungsmittelleitung kein ausreichender Freiraum verbleibt. Zugleich wird optimale Abstreifwirkung erreicht.

In einem bevorzugten Ausführungsbeispiel der Erfindung weist die Dichtlippe eine freie Länge in axialer Richtung auf, die mindestens 15% des Innendurchmessers der Beschichtungsmittelleitung und/oder mindestens 6% der axialen Länge des Grundkörpers beträgt.

Weiterhin ist die Dichtlippe bei dem bevorzugten Ausführungsbeispiel der erfindungsgemäßen Dichtlippe derart ausgebildet, dass die Dichtlippe durch den Druck eines in der Beschichtungsmittelleitung befindlichen Schiebemediums gegen die Innenwand der Beschichtungsmittelleitung gedrückt wird. Dies kann dadurch erreicht werden, dass sich die radial innen liegende Oberfläche der Dichtlippe im Wesentlichen axial erstreckt und in Kontakt mit dem in der Beschichtungsmittelleitung befindlichen Schiebemedium steht, so dass der auf die radial innen liegende Oberfläche der Dichtlippe wirkende hydrostatische Druck in der Beschichtungsmittelleitung die Dichtlippe radial nach außen gegen die Innenwand der Beschichtungsmittelleitung drückt.

Ferner ist die Dichtlippe bei dem bevorzugten Ausführungsbeispiel derart ausgebildet, dass die Dichtlippe bei einer Bewegung des Molchs in der Beschichtungsmittelleitung in Richtung der Dichtlippe durch die zwischen der Dichtlippe und der Innenwand der Beschichtungsmittelleitung wirkende Reibungskraft gegen die Innenwand der Beschichtungsmittelleitung gedrückt wird. Dies kann dadurch erreicht werden, dass der Berührungspunkt zwischen der Dichtlippe und der Innenwand der Beschichtungsmittelleitung radial außerhalb der Mantelfläche des Grundkörpers liegt, so dass die auf die Dichtlippe wirkende Reibungskraft ein Anpressmoment erzeugt, welches die Dichtlippe radial nach außen gegen die Innenwand der Beschichtungsmittelleitung drückt.

Die eigentliche Dichtwirkung wird vorzugsweise durch eine Dichtkante erzeugt, die auf der Außenseite der Dichtlippe bezüglich der Längsachse der Beschichtungsmittelleitung umläuft und im Betrieb an der Innenwand der Beschichtungsmittelleitung anliegt.

Vorzugsweise wird die Dichtkante auf der dem freien Ende der Dichtlippe zugewandten Seite von einer Übergangsfläche begrenzt, die mit der Innenwand der Beschichtungsmittelleitung einen Winkel zwischen 25° und 65° (bezogen auf einen Vollkreis mit 360°) einschließt. Als besonders vorteilhaft hat es sich erwiesen, wenn diese Übergangsfläche mit der Innenwand der Beschichtungsmittelleitung einen Winkel von etwa 45° einschließt.

Auf der dem freien Ende der Dichtlippe abgewandten Seite wird die Dichtkante vorzugsweise von einer Übergangsfläche begrenzt, die mit der Innenwand der Beschichtungsmittelleitung einen Winkel zwischen 10° und 60° (bezogen auf einen Vollkreis mit 360°) einschließt, wobei sich ein Wert von etwa 30° als besonders vorteilhaft erwiesen hat.

In einer vorteilhaften Variante der Erfindung weist der Molch an mindestens einer seiner beiden Stirnseiten einen Anschlagpuffer auf, der axial über die Dichtlippe hinausragt, um bei einem Anstoßen des Molchs an einem anderen Molch oder an einem Anschlag eine Beschädigung der Dichtlippe zu verhindern. Vorzugsweise besteht der Anschlagpuffer aus einem zylindrischen Vorsprung, der vorzugsweise mittig an einer oder beiden Stirnseiten des Grundkörpers angeordnet ist.

Bei dem bevorzugten Ausführungsbeispiel der Erfindung ist in dem Grundkörper ein Signalgeber angeordnet, der beispielsweise aus einem Permanentmagneten, einem Stahlkern oder einem anderen permanentmagnetischen Werkstoff bestehen kann und im Betrieb eine Überwachung der Position des Molchs durch einen separaten Molchsensor ermöglicht. Der Grundkörper ist hierbei einstückig um den Signalkörper herum angeformt, so dass der Grundkörper den Signalgeber hermetisch einschließt. Beispielsweise kann der Grundkörper an dem Signalgeber angespritzt, angegossen oder angeschäumt werden.

Weiterhin ist zu bemerken, dass der Grundkörper, die Dichtlippe und/oder der Anschlagpuffer vorzugsweise aus einem wasserlackbeständigen und/oder einem lösemittelbeständigen Material besteht, wobei vorzugsweise ein Elastomer Anwendung findet.

Ferner ist an dem Grundkörper und/oder an dem Anschlagpuffer eine tastbare und/oder sichtbare Markierung angeformt, welche die räumliche Ausrichtung des Signalgebers in dem Grundkörper anzeigt, damit der Molch in der gewünschten räumlichen Orientierung in die Beschichtungsmittelleitung eingesetzt werden kann.

Darüber hinaus umfasst die Erfindung nicht nur einen Molch als Einzelteil, sondern auch eine Beschichtungsanlage mit einem derartigen Molch sowie ein Herstellungsverfahren für einen erfindungsgemäßen Molch.

Andere Weiterbildungen der Erfindung sind in den Unteransprüchen gekennzeichnet oder werden nachstehend zusammen mit der Beschreibung des bevorzugten Ausführungsbeispiels der Erfindung anhand der Zeichnung näher erläutert. Es zeigen:
- Fig. 1: eine Querschnittsansicht eines erfindungsgemäßen Molchs;
- Fig. 2: teilweise im Querschnitt eine Beschichtungsmittelleitung mit dem hier beschriebenen Molch;
- Fig. 3: einen Querschnitt durch Fig. 2 längs der Ebene III-III; und
- Fig. 4: eine auseinandergezogene Ansicht des Molches und der' Beschichtungsmittelleitung.

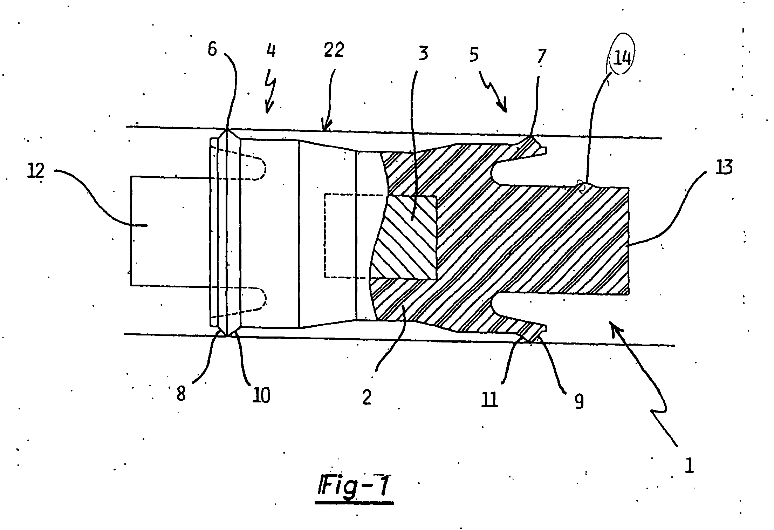

Die Querschnittsansicht in Figur 1 zeigt einen Molch 1, der in einer Beschichtungsanlage zur Serienbeschichtung von Kraftfahrzeugkarosserieteilen eingesetzt werden kann, um die Innenwand der Beschichtungsmittelleitungen bei einem Farbwechsel von anhaftenden Beschichtungsmittelresten zu befreien.

Der Molch 1 besteht im Wesentlichen aus einem näherungsweise zylindrischen Grundkörper 2 und einem in dem Grundkörper 2 angeordneten Signalgeber 3, der hier aus einem Permanentmagneten besteht und eine Überwachung der Position des Molchs 1 in der Beschichtungsmittelleitung ermöglicht.

Der Grundkörper 2 besteht hierbei aus einem Elastomer und ist durch einen Spritzgussvorgang außen an den Signalgeber 3 angegossen bzw. umspritzt.

Weiterhin weist der Molch 1 beidseitig Dichtlippen 4, 5 auf, die sich vom Umfangsrand des Grundkörpers 2 ausgehend axial nach außen erstrecken, wobei der Grundkörper 2 an seiner Außenseite im Wesentlichen absatzlos in die Dichtlippen 4, 5 übergeht. Durch diese Anordnung und Gestaltung der Dichtlippen 4, 5 wird verhindert, dass die Dichtlippen 4, 5 aufgrund der zwischen den Dichtlippen 4, 5 und der Innenwand der Beschichtungsmittelleitung 22 wirkenden Reibungskräfte umklappen können. Dadurch wird die Standzeit des erfindungsgemäßen Molchs 1 wesentlich erhöht, da die mit einem Umklappen der Dichtlippen 4, 5 verbundene starke Deformation zu einem hohen Verschleiß führen würde.

Die eigentliche Dichtwirkung wird hierbei durch jeweils eine Dichtkante 6, 7 erzeugt, die an der Außenseite der Dichtlippe 4, 5 angeordnet ist und über den Umfang der Dichtlippe umläuft, wobei die Dichtkanten 6, 7 im Betrieb an der Innenwand der Beschichtungsmittelleitung anliegen.

Auf der ihrem freien Ende zugewandten Seite sind die Dichtkanten 6, 7 durch eine Übergangsfläche 8, 9 begrenzt, die mit der Innenwand der Beschichtungsmittelleitung sowie mit der Längsachse des Molchs 1 einen Winkel von etwa 45° einschließt.

Auf der ihrem freien Ende abgewandten Seite sind die Dichtkanten 6, 7 dagegen von einer Übergangsfläche 10, 11 begrenzt, die mit der Innenwand der Beschichtungsmittelleitung und mit der Längsachse des Molchs einen Winkel von etwa 30° einschließt.

Darüber hinaus weist der Molch 1 beidseitig jeweils einen Anschlagpuffer 12, 13 auf, wobei die beiden Anschlagpuffer 12, 13 bezüglich der Längsachse des Molchs 1 mittig angeordnet sind und aus einem zylindrischen Vorsprung bestehen, der jeweils in axialer Richtung über Dichtlippen 4 bzw. 5 hinausragt. Dadurch wird bei einem Zusammenstoß des Molchs 1 mit einem anderen Molche oder einer Begrenzungsfläche verhindert, dass die Dichtlippen 4, 5 beschädigt werden.

Auf der Mantelfläche des Vorsprungs 13 ist hierbei eine sichtund tastbare Markierung 14 in Form einer Erhebung angeformt, welche die räumliche Orientierung des Signalgebers 3 innerhalb des Molchs 1 anzeigt. Auf diese Weise kann der Molch 1 stets in der gewünschten räumlichen Orientierung in eine Beschichtungsmittelleitung eingesetzt werden.

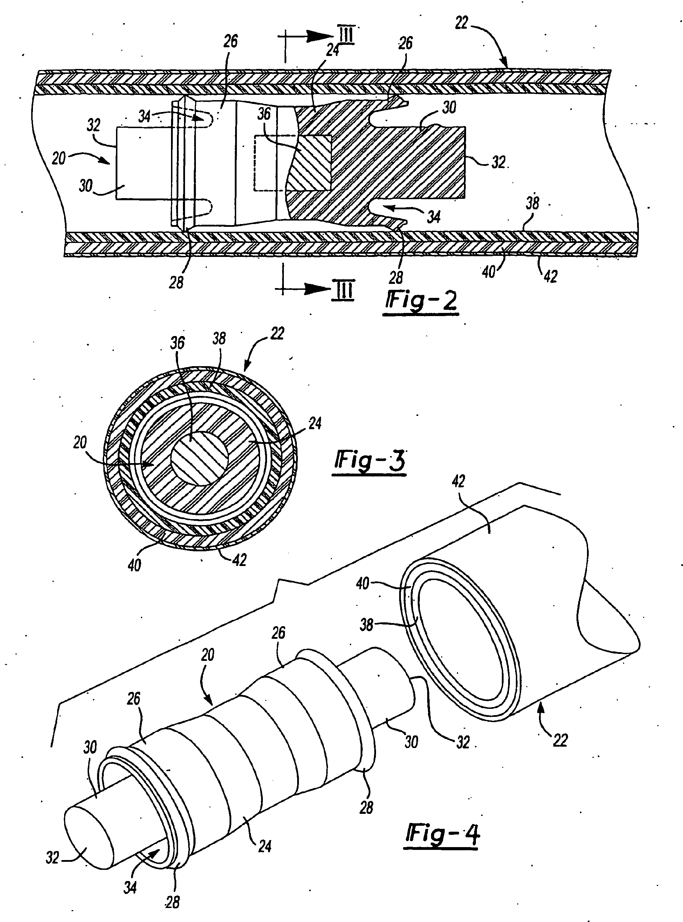

Fig. 2 zeigt den in die Beschichtungsmittelleitung 22 eingesetzten Molch 20 und dessen Grundkörper 24 mit den allgemein kegelstumpfförmigen, ringförmig vorkragenden Dichtlippen 26 auf den entgegengesetzten Enden des Grundkörpers und mit den im Querschnitt dreieckigen rippenartig von den Dichtlippen nahe an den Lippenenden radial nach außen vorspringenden Dichtkanten 28. Der Molch kann aus einem elastischen Polymer bestehen, beispielsweise aus Polyethylen. Der Außendurchmesser der Dichtlippen ist mindestens gleich oder vorzugsweise etwas größer als der Innendurchmesser der Leitung 22, so dass die Dichtlippen 26 die Innenfläche der Leitung 22 abstreifen können, wenn der Molch durch die Leitung bewegt wird. Die als Anschlagpuffer dienenden zylindrischen Endkörper 30 haben bei dem dargestellten Beispiel flache ebene Endflächen 32. Die Dichtlippen 26 bilden mit den Endkörpern 30 ringförmige, sich axial nach außen etwas erweiternde Hohlräume 34, in denen der Molch von einem Schiebemedium beaufschlagt werden kann. Ferner enthält der Molch ein Sensorelement 36, das beispielsweise der als Signalgeber 3 (Fig. 1) dienende Magnet sein kann und die genaue Bestimmung des Ortes des Molches 20 in der Leitung 22 ermöglicht.

Die Beschichtungsmittelleitung 22 ist vorzugsweise mehrlagig. Ihre Innenlage 38 besteht vorzugsweise aus einem glatten, reibungsfesten Polymer wie z.B. einem Perfluoralkoxyharz. Die Zwischenlage 40 besteht aus isolierendem Kunststoff wie z.B. Polyethylen, um Spannungsüberschläge zu verhindern. Die Außenlage 42 ist vorzugsweise relativ dünn und bildet eine äußere Schutzschicht der Leitung 22 beispielsweise aus Polyamid. Die Leitung 22 kann beispielsweise durch Koextrusion ihrer Lagen hergestellt werden, wodurch eine enge Bindung zwischen den Lagen erreicht und ein Ablösen bei Verwendung der Leitung vermieden wird. Die Leitung 22 ist vorzugsweise relativ flexibel. Ferner ist sie vorzugsweise transparent oder durchscheinend, damit während des Betriebes die Bewegung der Molche oder von Farbe oder Lösemittel durch die Leitung visuell verfolgt werden kann.

## Patentansprüche

1. Molch (1) für eine Beschichtungsmittelleitung in einer Beschichtungsanlage, mit einem in die Beschichtungsmittelleitung (22) einführbaren Grundkörper (2) mit mindestens einer im Betrieb an der Innenwand der Beschichtungsmittelleitung anliegenden Dichtlippe (4, 5) und mit einem in dem Grundkörper (2) angeordneten Signalgeber (3), wobei sich die Dichtlippe (4, 5) bezüglich der Längsachse der Beschichtungsmittelleitung im wesentlich axial von dem Grundkörper (2) ausgehend erstreckt und der Grundkörper einstückig an den Signalgeber (3) angeformt ist, wobei der Grundkörper (2) einstückig um den Signalgeber (3) herum angeformt ist, so dass der Grundkörper (2) den Signalgeber (3) hermetisch einschließt, **dadurch gekennzeichnet, dass** an den Grundkörper (2) und/oder an einen Anschlagpuffer (12, 13) eine tastbare und/oder sichtbare Markierung (14) angeformt ist, welche die räumliche Ausrichtung des Signalgebers in dem Grundkörper (2) anzeigt.

2. Molch (1) nach Anspruch 1, **dadurch gekennzeichnet, dass** der Grundkörper (2) an seiner Außenseite im wesentlichen absatzlos in die Dichtlippe (4, 5) übergeht.

3. Molch (1) nach mindestens einem der vorhergehenden Ansprüche, **dadurch gekennzeichnet, dass** die Dichtlippe (4, 5) derart ausgebildet ist, dass die Dichtlippe (4, 5) bei einer Bewegung des Molchs (1) in der Beschichtungsmittelleitung in Richtung der Dichtlippe (4, 5) trotz der zwischen der Dichtlippe (4, 5) und der Innenwand der Beschichtungsmittelleitung wirkenden Reibungskraft im wesentlichen formstabil bleibt.

4. Molch (1) nach mindestens einem der vorhergehenden Ansprüche, **dadurch gekennzeichnet, dass** der minimale Aussendurchmesser des Grundkörpers (2) mindestens 80% des Innendurchmessers der Beschichtungsmittelleitung beträgt.

5. Molch (1) nach mindestens einem der vorhergehenden Ansprüche, **dadurch gekennzeichnet, dass** die Dichtlippe (4, 5) eine freie Länge in axialer Richtung aufweist, die mindestens 15% des Innendurchmessers der Beschichtungsmittelleitung und/oder mindestens 6% der axialen Länge des Grundkörpers (2) beträgt.

6. Molch (1) nach mindestens einem der vorhergehenden Ansprüche, **dadurch gekennzeichnet, dass** die Dichtlippe (4, 5) an ihrer Aussenseite eine bezüglich der Längsachse der Beschichtungsmitteilung umlaufende Dichtkante (6, 7) aufweist, die im Betrieb an der Innenwand (15) der Beschichtungsmitteilung anliegt, und dass die Dichtlippe (4, 5) derart ausgebildet ist, dass die Dichtkante (6, 7) durch den Druck eines in der Beschichtungsmittelleitung befindlichen Schiebemediums gegen die Innenwand (15) der Beschichtungsmittelleitung gedrückt wird.

7. Molch (1) nach Anspruch 6, **dadurch gekennzeichnet, dass** die Dichtlippe (4, 5) derart ausgebildet ist, dass der auf die Dichtlippe (4, 5) wirkende Anpressdruck bei steigendem Druck des Schiebemediums zunimmt und bei fallendem Druck des Schiebemediums abnimmt.

8. Molch (1) nach mindestens einem der vorhergehenden Ansprüche, **dadurch gekennzeichnet, dass** die Dichtlippe (4, 5) derart ausgebildet ist, dass die Dichtlippe (4, 5) bei einer Bewegung des Molchs (1) in der Beschichtungsmittelleitung in Richtung der Dichtlippe (4, 5) durch die zwischen der Dichtlippe (4, 5) und der Innenwand (15) der Beschichtungsmittelleitung wirkende Reibungskraft gegen die Innenwand der Beschichtungsmittelleitung gedrückt wird.

9. Molch (1) nach mindestens einem der Ansprüche 6 bis 8, **dadurch gekennzeichnet, dass** die Dichtkante (6, 7) auf der dem freien Ende der Dichtlippe (4, 5) zugewandten Seite von einer Übergangsfläche (8, 9) begrenzt ist, die mit der Innenwand (15) der Beschichtungsmittelleitung einen Winkel zwischen 25° und 65° einschließt.

10. Molch (1) nach mindestens einem der Ansprüche 6 bis 9, **dadurch gekennzeichnet, dass** die Dichtkante (6, 7) auf der dem freien Ende der Dichtlippe (4, 5) abgewandten Seite von einer Übergangsfläche (10, 11) begrenzt ist, die mit der Innenwand der Beschichtungsmittelleitung einen Winkel zwischen 10° und 60° einschließt.

11. Molch (1) nach mindestens einem der vorhergehenden Ansprüche, **dadurch gekennzeichnet, dass** der Grundkörper (2) an mindestens einer seiner beiden Stirnseiten einen Anschlagpuffer (12, 13) aufweist, der axial über die Dichtlippe (4, 5) hinausragt.

12. Molch (1) nach Anspruch 11, **dadurch gekennzeichnet, dass** der Anschlagpuffer (12, 13) mittig an mindestens einer Stirnseite des Grundkörpers (2) angeordnet ist.

13. Molch (1) nach mindestens einem der vorhergehenden Ansprüche, **dadurch gekennzeichnet, dass** der Grundkörper (2) und/oder die Dichtlippe (4, 5) und/oder der Anschlagpuffer (12, 13) aus einem Elastomer besteht.

14. Molch (1) nach mindestens einem der vorhergehenden Ansprüche, **dadurch gekennzeichnet, dass** der Grundkörper (2) und/oder die Dichtlippe (4, 5) und/oder der Anschlagpuffer (12, 13) aus einem wasserlackbeständigen und/oder lösemittelbeständigen Material besteht.

15. Molch (1) nach einem der vorhergehenden Ansprüche, **dadurch gekennzeichnet, dass** die Markierung (14) an dem Anschlagpuffer (13) angeformt ist.

16. Beschichtungsanlage mit mindestens einer Beschichtungsmittelleitung (15) und einem in der Beschichtungsmittelleitung angeordneten Molch (1) nach mindestens einem der vorhergehenden Ansprüche.

17. Herstellungsverfahren für einen Molch (1) nach mindestens einem der vorhergehenden Ansprüche, bei dem der Grundkörper (2) mit der Dichtlippe (4, 5) einstückig geformt und um den Signalgeber (3) angespritzt wird, **dadurch gekennzeichnet, dass** an den Grundkörper (2) und/oder an einen Anschlagpuffer (12, 13) eine tastbare und/oder sichtbare Markierung (14) angeformt wird, welche die räumliche Orientierung des Signalgebers (3) in dem Grundkörper (2) anzeigt.

## Claims

1. A pig (1) for a coating agent line in a coating installation, having a main body (2) insertable into the coating agent line (22) and having at least one sealing lip (4, 5) resting against the inner wall of the coating agent line in operation, and having a signal transmitter (3) arranged in the main body (2), the sealing lip (4, 5) extending substantially axially from the main body (2) relative to the longitudinal axis of the coating agent line and the main body being formed in one-piece on the signal transmitter (3), the main body (2) being formed in one-piece around the signal transmitter (3) such that the main body (2) encloses the signal transmitter (3) hermetically, **characterised in that** a tactile and/or visible marker (14) is formed on the main body (2) and/or on a stop buffer (12, 13), which marker indicates the spatial orientation of the signal transmitter in the main body (2).

2. The pig (1) according to claim 1, **characterised in that** at its outside the main body (2) develops substantially steplessly into the sealing lip (4, 5).

3. The pig (1) according to at least one of the preceding claims, **characterised in that** the sealing lip (4, 5) is configured such that on movement of the pig (1) in the coating agent line in the direction of the sealing lip (4, 5) the sealing lip (4, 5) remains substantially dimensionally stable despite the frictional force acting between the sealing lip (4, 5) and the inner wall of the coating agent line.

4. The pig (1) according to at least one of the preceding claims, **characterised in that** the minimum external diameter of the main body (2) amounts to at least 80% of the internal diameter of the coating agent line.

5. The pig (1) according to at least one of the preceding claims, **characterised in that** the sealing lip (4, 5) has a free length in the axial direction which amounts to at least 15% of the internal diameter of the coating agent line and/or at least 6% of the axial length of the main body (2).

6. The pig (1) according to at least one of the preceding claims, **characterised in that** the sealing lip (4, 5) has a sealing edge (6, 7) on the outside which is circumferential relative to the longitudinal axis of the coating agent line, which sealing edge (6, 7) rests, in operation, against the inner wall (15) of the coating agent line, and **in that** the sealing lip (4, 5) is configured such that the sealing edge (6, 7) is forced by the pressure of a pushing medium located in the coating agent line against the inner wall (15) of the coating agent line.

7. The pig (1) according to claim 6, **characterised in that** the sealing lip (4, 5) is configured such that the contact pressure acting on the sealing lip (4, 5) increases as the pressure of the pushing medium rises and decreases as the pressure of the pushing medium falls.

8. The pig (1) according to at least one of the preceding claims, **characterised in that** the sealing lip (4, 5) is configured such that, in the event of movement of the pig (1) in the coating agent line in the direction of the sealing lip (4, 5), the sealing lip (4, 5) is forced against the inner wall of the coating agent line by the frictional force acting between the sealing lip (4, 5) and the inner wall (15) of the coating agent line.

9. The pig (1) according to at least one of claims 6 to 8, **characterised in that** the sealing edge (6, 7) is defined on the side facing the free end of the sealing lip (4, 5) by a transitional surface (8, 9) which forms an angle of between 25° and 65° with the inner wall (15) of the coating agent line.

10. The pig (1) according to at least one of claims 6 to 9, **characterised in that** the sealing edge (6, 7) is defined on the side facing away from the free end of the sealing lip (4, 5) by a transitional surface (10, 11) which forms an angle of between 10° and 60° with the inner wall of the coating agent line.

11. The pig (1) according to at least one of the preceding claims, **characterised in that** the main body (2) has a stop buffer (12, 13) at at least one of its two end faces, which buffer projects axially beyond the sealing lip (4, 5).

12. The pig (1) according to claim 11, **characterised in that** the stop buffer (12, 13) is arranged centrally on at least one end face of the main body (2).

13. The pig (1) according to at least one of the preceding claims, **characterised in that** the main body (2) and/or the sealing lip (4, 5) and/or the stop buffer (12, 13) consists of an elastomer.

14. The pig (1) according to at least one of the preceding claims, **characterised in that** the main body (2) and/or the sealing lip (4, 5) and/or the stop buffer (12, 13) consists of a material which is resistant to water-based paint and/or solvent.

15. The pig (1) according to any one of the preceding claims, **characterised in that** the marker (14) is formed on the stop buffer (13).

16. A coating installation comprising at least one coating agent line (15) and one pig (1) according to at least one of the preceding claims arranged in the coating agent line.

17. A method of producing a pig (1) according to at least one of the preceding claims, in which the main body (2) is formed in one piece with the sealing lip (4, 5) and is injection-moulded around the signal transmitter (3), **characterised in that** a tactile and/or visible marker (14) is formed on the main body (2) and/or on a stop buffer (12, 13), which marker (14) indicates the spatial orientation of the signal transmitter (3) in the main body (2).

## Revendications

1. Racleur (1) pour une conduite d'agent de revêtement dans une installation de revêtement, comprenant un corps de base (2) pouvant être introduit dans la conduite d'agent de revêtement (22) avec au moins une lèvre d'étanchéité (4, 5) s'appliquant pendant le fonctionnement sur la paroi interne de la conduite d'agent de revêtement et un générateur de signaux (3) disposé dans le corps de base (2), la lèvre d'étanchéité (4, 5) s'étendant sensiblement axialement à partir du corps de base (2) par rapport à l'axe longitudinal de la conduite d'agent de revêtement et le corps de base étant formé d'un seul tenant sur le générateur de signaux (3), le corps de base (2) étant formé d'un seul tenant autour du générateur de signaux (3), de sorte que le corps de base (2) enferme hermétiquement le générateur de signaux (3), **caractérisé en ce qu'**un marquage (14) palpable et/ou visible, qui indique l'orientation dans l'espace du générateur de signaux dans le corps de base (2), est formé sur le corps de base (2) et/ou sur un tampon de butée (12, 13).

2. Racleur (1) selon la revendication 1, **caractérisé en ce que** le corps de base (2) fait place sur son côté extérieur sensiblement sans déport à la lèvre d'étanchéité (4, 5).

3. Racleur (1) selon au moins l'une quelconque des revendications précédentes, **caractérisé en ce que** la lèvre d'étanchéité (4, 5) es conçue de telle sorte que la lèvre d'étanchéité (4, 5) reste sensiblement indéformable lors d'un déplacement du racleur (1) dans la conduite d'agent de revêtement en direction de la lèvre d'étanchéité (4, 5) malgré la force de frottement agissant entre la lèvre d'étanchéité (4, 5) et la paroi interne de la conduite d'agent de revêtement.

4. Racleur (1) selon au moins l'une quelconque des revendications précédentes, **caractérisé en ce que** le diamètre extérieur minimum du corps de base (2) représente au moins 80 % du diamètre intérieur de la conduite d'agent de revêtement.

5. Racleur (1) selon au moins l'une quelconque des revendications précédentes, **caractérisé en ce que** la lèvre d'étanchéité (4, 5) présente une longueur libre dans le sens axial, qui représente au moins 15 % du diamètre intérieur de la conduite d'agent de revêtement et/ ou au moins 6 % de la longueur axiale du corps de base (2).

6. Racleur (1) selon au moins l'une quelconque des revendications précédentes, **caractérisé en ce que** la lèvre d'étanchéité (4, 5) présente sur son côté extérieur une arête d'étanchéité (6, 7) périphérique par rapport à l'axe longitudinal de la conduite d'agent de revêtement, qui est contiguë pendant le service à la paroi interne (15) de la conduite d'agent de revêtement, et **en ce que** la lèvre d'étanchéité (4, 5) est conçue de telle sorte que l'arête d'étanchéité (6, 7) est appuyée par la pression d'un fluide de glissement se trouvant dans la conduite d'agent de revêtement contre la paroi interne (15) de la conduite d'agent de revêtement.

7. Racleur (1) selon la revendication 6, **caractérisé en ce que** la lèvre d'étanchéité (4, 5) est conçue de telle sorte que la pression d'appui agissant sur la lèvre d'étanchéité (4, 5) croît lorsque la pression du fluide de glissement augmente et diminue lorsque la pression du fluide de glissement chute.

8. Racleur (1) selon au moins l'une quelconque des revendications précédentes, **caractérisé en ce que** la lèvre d'étanchéité (4, 5) est conçue de telle sorte que la lèvre d'étanchéité (4, 5) est appuyée lors d'un déplacement du racleur (1) dans la conduite d'agent de revêtement en direction de la lèvre d'étanchéité (4, 5) par la force de frottement agissant entre la lèvre d'étanchéité (4, 5) et la paroi interne (15) de la conduite d'agent de revêtement contre la paroi interne de la conduite d'agent de revêtement.

9. Racleur (1) selon au moins l'une quelconque des revendications 6 à 8, **caractérisé en ce que** l'arête d'étanchéité (6, 7) est délimitée, sur le côté tourné vers l'extrémité libre de la lèvre d'étanchéité (4, 5), par une surface de transition (8, 9) qui forme avec la paroi interne (15) de la conduite d'agent de revêtement un angle compris entre 25° et 65°.

10. Racleur (1) selon au moins l'une quelconque des revendications 6 à 9, **caractérisé en ce que** l'arête d'étanchéité (6, 7) est délimitée, sur le côté opposé à l'extrémité de la lèvre d'étanchéité (4, 5), par une surface de transition (10, 11) qui forme avec la paroi interne de la conduite d'agent de revêtement un angle compris entre 10° et 60°.

11. Racleur (1) selon au moins l'une quelconque des revendications précédentes, **caractérisé en ce que** le corps de base (2) présente sur au moins l'un-de ses deux côtés avant un tampon de butée (12, 13), qui dépasse axialement de la lèvre d'étanchéité (4, 5).

12. Racleur (1) selon la revendication 11, **caractérisé en ce que** le tampon de butée (12, 13) est disposé au centre sur au moins un côté avant du corps de base (2).

13. Racleur (1) selon au moins l'une quelconque des revendications précédentes, **caractérisé en ce que** le corps de base (2) et/ou la lèvre d'étanchéité (4, 5) et/ou le tampon de butée (12, 13) est/ sont à base d'un élastomère.

14. Racleur (1) selon au moins l'une quelconque des revendications précédentes, **caractérisé en ce que** le corps de base (2) et/ou la lèvre d'étanchéité (4, 5) et/ou le tampon de butée (12, 13) est/sont à base d'un matériau résistant à la laque à l'eau et/ou résistant aux solvants.

15. Racleur (1) selon l'une quelconque des revendications précédentes, **caractérisé en ce que** le marquage (14) est formé sur le tampon de butée (13).

16. Installation de revêtement comprenant au moins une conduite d'agent de revêtement (15) et un racleur (1) disposé dans la conduite d'agent de revêtement selon au moins l'une quelconque des revendications précédentes.

17. Procédé de fabrication pour un racleur (1) selon au moins l'une quelconque des revendications précédentes, dans lequel le corps de base (2) est formé d'un seul tenant avec la lèvre d'étanchéité (4, 5) et est injecté autour du générateur de signaux (3), **caractérisé en ce qu'**un marquage (14) palpable et/ou visible est formé sur le corps de base (2) et/ou sur un tampon de butée (12, 13), lequel marquage indique l'orientation dans l'espace du générateur de signaux (3) dans le corps de base (2).
